# FASCICULE DE BREVET EUROPEEN

(11) **EP 1 351 533 B1**
(45) Date de publication et mention de la délivrance du brevet: **22.10.2014**
(21) Numéro de dépôt: 03075618.3
(22) Date de dépôt: 28.02.2003
(51) Int. Cl.: H04W 16/18

(54) **Procédé et système destinés au déploiement de la couverture radio d'un réseau de radiotéléphonie cellulaire**
Verfahren und System zum Entfalten von Funkabdeckung eines zellularen Mobilfunknetzes
Method and system for deploying the radio coverage of a cellular radio telephone network

(30) Priorité: 19.03.2002 FR 0203487
(43) Date de publication de la demande: 08.10.2003
(73) Titulaire: Société Française du Radiotéléphone-SFR, 75008 Paris (FR)
(72) Inventeur: Fattouch, Imad, 75013 Paris (FR); Vincent, Francois, 92140 Clamart (FR); Serre, Soudabeh, 78420 Carrieres sur Seine (FR)
(74) Mandataire: Debay, Yves

(56) Documents cités:
- WO-A-94/03986
- WO-A-94/03992
- US-A- 6 094 580
- US-A1- 2001 051 503
- GRASSO S M ET AL: "DEMON: a forecasting tool for demand evaluation of mobile network resources" CSELT TECHNICAL REPORTS, APRIL 1997, CSELT, ITALY, vol. 25, no. 2, pages 257-266, XP008011474 ISSN: 0393-2648
- CAVILL M: "A geographical approach to telecommunications forecasting: new tools for a new era" TELECOMMUNICATION JOURNAL OF AUSTRALIA, 1988, AUSTRALIA, vol. 38, no. 3, pages 43-46, XP008011628 ISSN: 0040-2486
- DONATELLI G ET AL: "Cellular network strategic planning methods in a service profitability analysis perspective" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5 octobre 1998 (1998-10-05), pages 275-279, XP010314938 ISBN: 0-7803-5106-1

## Description

La présente invention concerne les réseaux de radiotéléphonie cellulaire, et plus particulièrement, pour l'amélioration de la couverture radio dans un réseau géré par un opérateur, un procédé de modélisation et un système informatique destinés au déploiement de ladite couverture radio dudit réseau.

Un réseau de radiotéléphonie cellulaire est constitué d'une pluralité de stations radioélectriques terrestres de base qui assurent la couverture radio de zones définissant des cellules respectives. Pour pouvoir établir les communications entre les terminaux radio mobiles circulant dans la zone d'une cellule et la station, les circuits récepteurs des terminaux et de la station doivent recevoir les signaux au-dessus de leur seuil de sensibilité.

Dans le cadre de l'offre de service de communication pour les terminaux mobiles, un opérateur radio doit respecter le taux de couverture sur lequel il s'est engagé (proportion du territoire, pourcentage de la population...) s'il souhaite obtenir puis conserver sa licence d'opérateur et ne pas favoriser outre mesure les concurrents. La demande de brevet FR 01 10724 par le même déposant, qui concerne le calcul statistique du taux de couverture, en est l'exemple même et est ici cité comme référence. A cette fin, l'utilisation d'outils de prédiction et de bases de données cartographiques de type altimétriques, démographiques, d'occupation du sol, lui permettent de positionner au mieux ses infrastructures et d'optimiser le dimensionnement de ses équipements. Ce travail est en général effectué par l'ingénierie radio aidée par des outils de calcul de propagation, les études sur la propagation permettant de déterminer la couverture théorique d'un réseau.

Dans l'art antérieur, la définition des sites potentiels à déployer pour un réseau de radiotéléphonie cellulaire constituait une tâche fastidieuse pour les ingénieurs radio. Ce travail d'optimisation de la couverture du réseau se conforme à des spécifications marketing parfois changeantes et il arrive que les études concernant la planification de nouveaux sites, qui durent plusieurs mois, soient remises en cause ou abandonnées. La planification à moyen terme des sites à déployer soulève un problème de durée et de charge de travail pour l'opérateur.

Le document GRASSO S M ET AL: "DEMON: a forecasting tool for demand evaluation of mobile network resources*"*, décrit un procédé de modélisation destiné au déploiement de la couverture radio d'un réseau de radiotéléphonie cellulaire, comportant une étape de sélection d'une carte géographique par des moyens interactifs entre l'utilisateur et le système.

La présente invention a donc pour objet de supprimer un ou plusieurs des inconvénients de l'art antérieur en définissant un procédé de modélisation destiné au déploiement de la couverture radio d'un réseau qui permet, en tenant compte de spécificités marketing, de définir sur une carte géographique les emplacements de stations radioélectriques à installer.

A cet effet, l'invention concerne un procédé de modélisation destiné au déploiement de la couverture radio d'un réseau de radiotéléphonie cellulaire, au moyen d'un système informatique mémorisant des données représentatives de cartes de couverture radio initiale ou couverture de référence dudit réseau de radiotéléphonie cellulaire, des données représentatives de cartes géographiques découpées en zones délimitées par un contour, dites données géomarketing, des données représentatives d'au moins un type de station radio, des données représentatives d'un seuil de suffisance de couverture et des données représentatives d'un seuil de couverture dans chaque contour, procédé caractérisé en ce qu'il comporte dans un premier temps les étapes successives suivantes :
- sélection d'une carte géographique par des moyens interactifs entre l'utilisateur et ledit système,
- récupération des données géomarketing et des données représentatives de la carte de couverture de référence correspondant à la carte géographique sélectionnée,
puis dans un deuxième temps le traitement successif de chaque contour à l'aide d'un programme exécuté par ledit système informatique, ce traitement se déroulant de la manière suivante :
- si le seuil de suffisance de couverture du contour n'est pas atteint par la couverture actuelle, établissement par des moyens de calcul dudit système informatique, notamment à partir des données représentatives de la carte géographique sélectionnée, d'un maillage régulier et de pas déterminé de sites potentiels représentant des stations radioélectriques à ajouter à l'intérieur du contour, chaque site étant éloigné d'un autre d'au moins une distance déterminée,
   pas la couverture à un niveau supérieur audit seuil de couverture fixé pour le contour.
- définition d'une pluralité de classes de contours et de pas de maillage par des moyens de mémorisation dans ledit système informatique, les classes étant hiérarchisées, à chaque classe de contour étant attribué un pas de maillage ayant une valeur d'autant plus petite que la classe sera élevée dans la hiérarchie,
- le traitement successif de chaque contour est effectué dans un ordre établi par la hiérarchie des classes, les contours de la classe la plus élevée étant traités en premier, les contours de la classe la moins élevée étant traités en dernier,
- sélection ou élimination par ledit programme des sites potentiels en fonction d'au moins un critère relatif à leur utilité, ledit système informatique disposant de données mémorisées d'une loi d'atténuation de propagation radio, de données relatives au type de station radio utilisée, et se sert de ces données pour simuler la couverture radio engendrée par un site ajouté.

Selon une autre particularité, ledit procédé comporte une étape de saisie dans au moins un fichier de configuration des paramètres suivants :
- nom du fichier relatif à ladite carte géographique,
- nom du fichier relatif aux spécifications du marketing,
- nom du fichier de couverture de référence,
- premier numéro, à 6 chiffres, de site à partir duquel les numéros de sites potentiels sont incrémentés,
- taux de couverture minimal pour les zones qui ne correspondent pas à des axes,
- taux de couverture minimal pour les zones qui correspondent à des axes,
- seuil de suffisance de couverture,
- valeur correspondant au niveau du champ cible fixé par l'opérateur pour chaque classe de contours,
- valeur du pas minimal du maillage pour chaque classe de contours,
- paramètres relatifs au type de station radio et d'antenne utilisées.

Selon une autre particularité, lesdits paramètres relatifs au type de station radio et d'antenne utilisées comprennent notamment:
- la hauteur de l'antenne utilisée pour la station radio,
- le nom de l'antenne utilisée,
- la puissance en sortie de baie d'émission, exprimée en dBW, pour l'antenne utilisée,
- l'atténuation d'émission de l'antenne,
- les pertes entre la baie d'émission et l'antenne, exprimée en dB.

Un autre but de l'invention est d'apporter une solution à un ou plusieurs des problèmes rencontrés dans l'art antérieur en définissant un système informatique de planification de nouveaux sites à déployer, spécialement adapté au procédé selon l'invention, pour améliorer la couverture radio d'un réseau de radiotéléphonie cellulaire.

Ce but est atteint par un système informatique de modélisation destiné au déploiement de la couverture radio d'un réseau de radiotéléphonie cellulaire, disposant de données représentatives de cartes de couverture radio initiale ou couverture de référence dudit réseau de radiotéléphonie cellulaire, de données représentatives de cartes géographiques découpées en zones délimitées par un contour, dites données géomarketing, de moyens interactifs permettant à l'utilisateur de fixer préalablement des données relatives à au moins un type de station radio, à un seuil de suffisance de couverture et à un seuil de couverture à l'intérieur de chaque contour, système informatique caractérisé en ce qu'il comporte :
- des moyens de sélection d'une carte géographique, de récupération des données géomarketing et des données représentatives de la carte de couverture de référence correspondant à la carte géographique sélectionnée,
- un module, utilisant notamment des données représentatives de la carte géographique sélectionnée, effectuant un maillage régulier et de pas déterminé de sites potentiels représentant des stations radioélectriques à ajouter à l'intérieur du contour, chaque site étant éloigné d'un autre d'au moins une distance déterminée,
- des moyens de comparaison, pour chaque site potentiel dudit maillage régulier, entre d'une part la couverture de référence dans le disque de rayon égal à ladite distance déterminée et centré sur le site, et d'autre part le seuil de suffisance de couverture, permettant au système de conserver ce site parmi les sites potentiels si le seuil de suffisance de couverture n'est pas atteint dans ledit disque,
- des moyens de représentation des couvertures des sites potentiels conservés, de mémorisation des données correspondant à ces nouvelles couvertures, et de définition de la nouvelle couverture dans le contour,
- des moyens de calcul, prenant les sites un à un, pour calculer la part de la contribution des sites à la couverture du contour,
- des moyens d'ajout, de proche en proche, des sites potentiels contribuant le plus à la couverture totale tant que l'ajout d'un site n'amène pas la couverture à un niveau supérieur audit seuil de couverture fixé pour le contour,
et en ce qu'il dispose de données mémorisées d'une loi d'atténuation de propagation radio, de données relatives au type de station radio utilisée, et se sert de ces données pour simuler la couverture radio engendrée par la création d'un site.

Selon une autre particularité de l'invention, ledit système dispose de données mémorisées d'une loi d'atténuation de propagation radio, de données relatives au type de station radio utilisée et se sert de ces données pour simuler la couverture radio engendrée par la création d'un site.

Selon une autre particularité, le système selon l'invention comporte des moyens de mémorisation et de prise en compte d'une pluralité de classes de contours et de pas de maillage, les classes étant hiérarchisées, à chaque classe de contour de contour étant attribué un pas de maillage ayant une valeur d'autant plus petite que la classe sera élevée dans la hiérarchie.

Selon une autre particularité, le système selon l'invention dispose de moyens de présélection de contours en fonction de leur classe permettant notamment au système de suivre un ordre établi par la hiérarchie desdites classes pour le traitement des contours, les contours de la classe la plus élevée étant traités en premier, les contours de la classe la moins élevée étant traités en dernier.

Selon une autre particularité de l'invention, lesdits contours se divisent notamment en deux catégories :
- les contours d'une première catégorie incluant des axes de transport et formant des polygones aplatis,
- les autres contours, appartenant à une deuxième catégorie, qui forment des polygones.

Selon une autre particularité, ledit maillage régulier d'un contour est hexagonal, chaque site potentiel étant trisectoriel et localisé à l'intersection de trois hexagones réguliers dans le cas des contours de ladite deuxième catégorie.

Selon une autre particularité, le maillage régulier est effectué par l'intermédiaire de sites bisectoriels et orientés dans le sens de l'axe de transport pour les contours de ladite première catégorie.

Selon une autre particularité, le système selon l'invention comporte des moyens de mémorisation et de prise en compte d'au moins un fichier contenant des données de géomarketing, d'au moins un fichier contenant la couverture de référence, et d'au moins un fichier de configuration comprenant l'ensemble des paramètres d'entrée saisis par l'utilisateur.

L'invention, avec ses caractéristiques et avantages, ressortira plus clairement à la lecture de la description faite en référence aux dessins annexés donnés à titre d'exemples non limitatifs dans lesquels :
- la figure 1 représente schématiquement une carte géographique portant une partie d'un réseau de radiotéléphonie cellulaire auquel a été appliqué le procédé selon l'invention,
- la figure 2 représente le processus de validation des sites pour un contour,

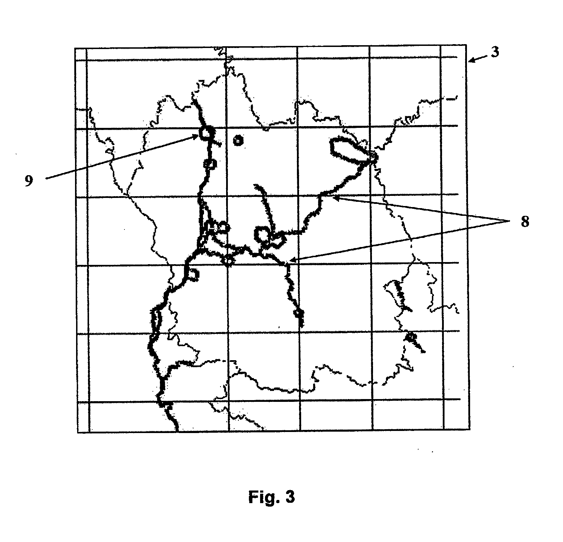

- La figure 3 représente une carte géographique avec des surfaces et des axes routiers qui correspondent à des spécifications du marketing.

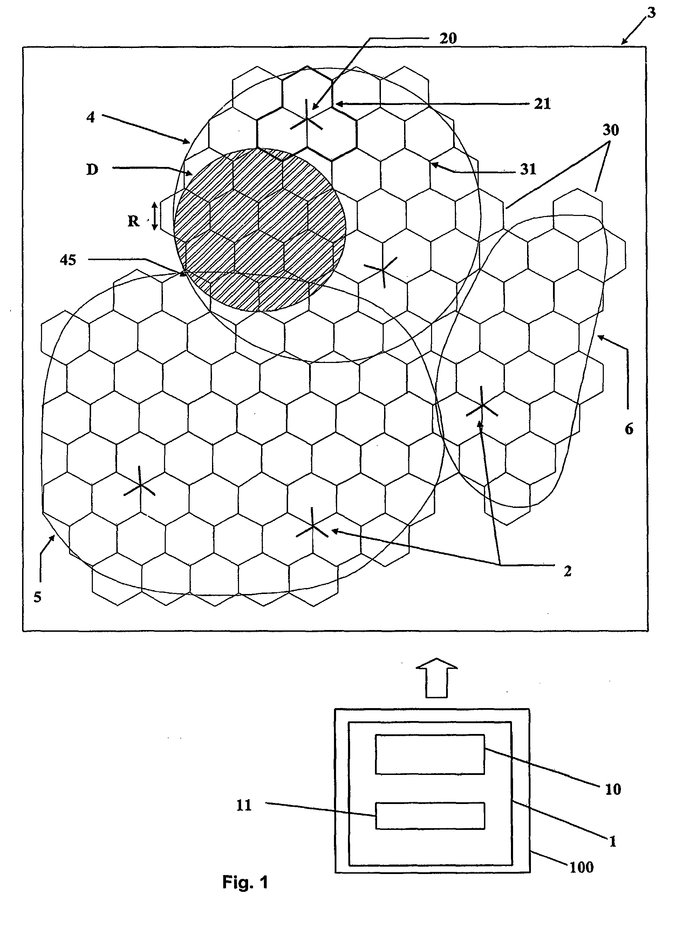

La figure 1 représente, sur un dispositif d'affichage d'un système informatique (100), une carte (3) d'une zone géographique d'un réseau de radiotéléphonie cellulaire en cours d'amélioration. Comme représenté, les contours (4 à 6) peuvent déborder les uns sur les autres, le contour (4) ayant une zone de bord (45) commune avec le contour (5). Comme on le comprendra, le recouvrement entre contours (4 à 6) n'est qu'un cas particulier dans le cadre de l'invention.

La carte (3) est une représentation de données d'une carte numérique stockée dans une base de données (10) d'une mémoire (1) pouvant contenir divers fichiers et bases de données, non représentés en figure 1, du système informatique (100), dont les moyens de traitement de calcul, ou unité centrale, de mémorisation, de saisie et de présentation de données, par un clavier et/ou un écran d'affichage interactif avec souris ou autre, n'ont pas été représentés en détail. La carte numérique spécifie notamment les reliefs naturels et artificiels, ainsi que leur nature, telle que forêt, immeubles et autres, ce qui permet de calculer une estimation de l'atténuation radio de la liaison affectée par les reliefs.

L'opérateur du réseau à améliorer souhaite ajouter des stations radioélectriques terrestres (2) en suivant des spécifications liées au marketing qu'il a défini lors d'étapes précédentes. Pour cela sont mémorisés dans la base de données (10) des fichiers contenant des données de géomarketing, et des fichiers contenant la couverture de référence. Les données de géomarketing peuvent comprendre d'une part des données relatives à un découpage géographique et d'autre part des données relatives à des spécifications marketing. L'ensemble des données préalablement enregistrées permet d'établir la couverture radio initiale du réseau ou couverture de référence et ainsi d'obtenir une carte (3), comme représentée en figure 1, avec des contours (4 à 6) définis par le marketing. Un niveau de champ cible doit être également fixé au sein de ces contours (4 à 6). Le taux de couverture calculé dans un contour est obtenu en exploitant la méthode de calcul statistique d'un taux de couverture présentée dans la demande de brevet FR 01 10724.

Selon un mode de réalisation préféré, le fonctionnement de l'invention requiert préalablement la saisie d'une pluralité de paramètres d'entrée dans un fichier de configuration (11) détaillé en annexe. Afin que le système informatique (100) prenne en compte certains fichiers mémorisés dans la base de données (10), des paramètres tels que le nom du fichier relatif à ladite carte géographique (3), le nom du fichier relatif aux spécifications du marketing, le nom et éventuellement le chemin du fichier de couverture de référence, doivent être saisis. Au moins un taux de couverture minimal souhaité à l'intérieur d'un contour doit être également rentré comme paramètre. De façon non limitative, on peut même prévoir deux taux de couverture minimaux : un premier pour les zones qui correspondent à des axes (8), par exemple des axes routiers, et un deuxième pour les zones qui ne correspondent pas à des axes (8), appelées surfaces (9). Un autre paramètre à saisir est le seuil de suffisance de couverture qui sert de référence pour sélectionner des sites potentiels (31) à un endroit où la couverture initiale est trop faible. La valeur correspondant au niveau du champ cible et celle correspondant au pas minimal du maillage (72), fixées par l'opérateur pour un contour, sont des paramètres supplémentaires à saisir dans ledit fichier de configuration (11). Le pas minimal du maillage (72) est saisi sous forme d'un rayon (R) exprimé en mètres, comme illustré en annexe. Comme chaque contour appartient à une classe de contours définie par le marketing, l'opérateur prévoit différentes valeurs de niveau de champ cible, A++, A+, A, et B selon l'exemple non limitatif de l'annexe, qui permettent de différencier des niveaux d'exigence entre des classes de contours. A++ peut ainsi correspondre à un niveau de champ suffisamment élevé pour pouvoir téléphoner avec un terminal radio mobile à l'intérieur d'un bâtiment. Dans un cas illustratif pour lequel l'opérateur aurait prévu trois niveaux de champ cible pour vingt-sept classes, il faudrait saisir pour chacune des vingt-sept classes l'un des trois niveaux, et de cette façon rassembler les contours (4 à 6) dans trois groupes, l'intérêt marketing étant le plus fort dans le groupe dont le niveau de champ cible est le plus élevé. De manière analogue, l'opérateur peut prévoir différentes valeurs de pas de maillage (72), le pas minimal étant d'autant plus petit, par exemple fixé à 400 mètres pour le fichier de configuration (11) indiqué en annexe, que l'intérêt marketing est grand. D'autres paramètres, notamment relatifs au type de station radio (2) et d'antenne utilisées, doivent être saisis dans le fichier de configuration (11) tels que la hauteur et le nom de l'antenne, la puissance en sortie de baie d'émission, l'atténuation d'émission et les pertes entre la baie d'émission et l'antenne.

Le tableau ci-dessous illustre une possibilité de classification de contours délimitant des entités géographiques de nature différente. Ces entités sont définies avec un ordre de priorité en fonction de leur intérêt marketing.

| Classe Marketing | Ordre de priorité utilisé | Entité géographique |
|---|---|---|
| 1 | 1 | Agglomérations > 500 K hab./km² |
| 2 | 17 | 1ère Couronne |
| 3 | 2 | Agglomérations > 10 K hab./km² dans premières couronnes |
| 4 | 3 | Agglomérations et communes > 2 K hab./km² dans premières couronnes |
| 5 | 4 | Agglomérations > 200 K hab./km² |
| 6 | 18 | 1ère Couronne |
| 7 | 5 | Agglomérations > 10 K hab./km² dans premières couronnes |
| 8 | 6 | Agglomérations et communes > 2 K hab./km² dans premières couronnes |
| 9 | 7 | Agglomérations > 100 K hab./km² |
| 10 | 19 | 1ère Couronne |
| 11 | 8 | Agglomérations > 10 K hab./km² dans premières couronnes |
| 12 | 9 | Agglomérations et communes > 2K hab./km² dans premières couronnes |
| 13 | 10 | Agglomérations > 50 K hab./km² |
| 14 | 20 | 1ère Couronne |
| 15 | 11 | Agglomérations > 10 K hab./km² dans premières couronnes |
| 16 | 12 | Agglomérations et communes > 2K hab./km² dans premières couronnes |
| 17 | 13 | Agglomérations > 20 K hab./km² |
| 18 | 14 | Agglomérations > 10 K hab./km² |
| 19 | 16 | Zones d'accueil > 500 résidences secondaires |
| 20 | 15 | Agglomérations et communes > 2 K hab./km² |
| 21 | 21 | Axes > 8000 Voitures/Jour |
| 22 | 22 | Axes > 4000 V/J |
| 23 | 25 | Communes > 1 K hab./km² |
| 24 | 23 | Axes > 2000 V/j |
| 25 | 24 | Bande littorale de 10km |
| 26 | 26 | Reste non montagneux, non forestier |
| 27 | 27 | reste |

Une fois les paramètres d'entrée saisis, l'utilisateur active une commande permettant au système informatique selon l'invention (100) de lancer une application en continu. Cette application, sous la forme par exemple d'un programme exécuté par ledit système (100), consiste notamment, après la prise en compte préalable d'une carte géographique (3) correspondant par exemple à un département, à sélectionner (71) un ensemble de contours (4 à 6) sur ladite carte (3) et à établir la position des sites de stations radio (2) à implanter à l'intérieur desdits contours. Dans le cadre du traitement de la zone illustrée sur la carte (3), comme représenté en figure 1, une présélection de contours est réalisée par des moyens de présélection du système informatique (100) pour traiter prioritairement l'intérieur des contours pour lesquels un niveau de champ cible élevé a été saisi, c'est-à-dire pour lesquels a été défini le plus grand intérêt marketing. Par exemple, sur la carte (3), le contour (4) appartient à une classe marketing définie selon le critère suivant : densité de population supérieure à 10000 habitants/km². Les deux autres contours (5 et 6), appartenant à une classe marketing moins élevée, avec un ordre de priorité inférieur au contour (4) susmentionné, seront traités ultérieurement.

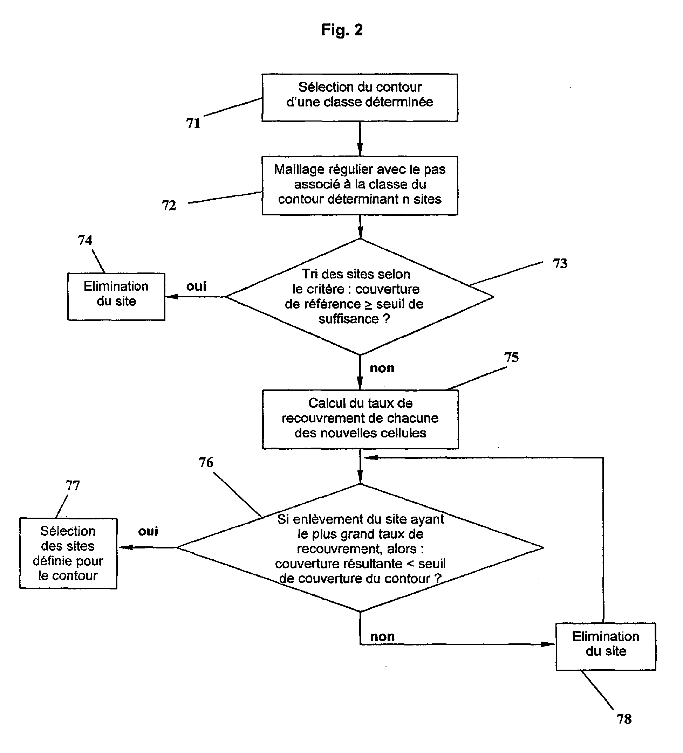

L'application va alors analyser chaque contour (4,5,6) et trouver un nombre déterminé de sites à ajouter (20) en suivant toujours un même processus de validation de nouveaux sites, illustré en figure 2.

Ledit processus de validation de nouveaux sites, appliqué à la carte géographique (3), commence par une étape de sélection (71) du contour (4) le plus exigeant par l'intermédiaire de moyens de sélection du système informatique (100). Il se poursuit par l'établissement d'un maillage régulier (72) à l'intérieur du contour (4) sélectionné grâce à un module de programme exécuté par le système informatique (100). Le maillage (72) est réalisé avec le pas saisi en paramètre. Généralement, la taille de ce pas est fonction de la classe du contour (4) sélectionné. Le pas du maillage des contours (4 à 6) sur la carte géographique (3) peut rester le même, comme illustré en figure 1, mais dans un mode de réalisation avantageux de l'invention le maillage du contour (4) le plus exigeant sera plus fin que les autres.

Un positionnement des sites potentiels (31) est effectué suivant le maillage (72) réalisé. Ce maillage (72) est de préférence hexagonal, avec des hexagones (30) réguliers de côté (R). Avantageusement, si le contour (4) ne correspond pas à un axe (8), les sites potentiels (31) sont trisectoriels, situés à l'intersection de trois mailles, chaque maille étant schématisée par un hexagone (30). Ces sites (31) trisectoriels sont localisés au centre d'une zone polygonale (21), dite contour de site, formée de trois hexagones réguliers (30). Si le contour correspond à un axe (8), les sites potentiels sont bisectoriels, régulièrement répartis sur l'axe (8) et orientés dans le sens de l'axe (8). On peut naturellement envisager d'autres variantes avec des sites potentiels (31) ayant un nombre de secteurs et donc un contour de site (21) différents. Ces sites potentiels (31) et leurs coordonnées de positionnement sont mémorisés provisoirement.

Certains des sites potentiels (31) doivent être éliminés et d'autres sélectionnés en fonction de critères traduisant leur utilité.

Le processus de validation de nouveaux sites se poursuit par une étape de tri (73) des sites les plus utiles (20). Pour cela, l'application comporte des premiers moyens de comparaison rapides, pour chaque site potentiel (31) dudit maillage régulier (72), entre la couverture de référence, établie dans un disque (D) de rayon égal à trois fois le côté (R) de chaque hexagone (30) et centré sur un site potentiel (31), et le seuil de suffisance de couverture. Un site potentiel (31) placé dans un endroit où la couverture de référence est déjà tout à fait suffisante sera éliminé à l'étape d'élimination (74). Cette étape d'élimination (74) fait suite à l'étape de tri (73) par l'intermédiaire de premiers moyens d'élimination du système informatique (100) permettant d'une part l'effacement dans la mémoire des sites potentiels pour lesquels la couverture de référence atteint ledit seuil de suffisance, et d'autre part de conserver les autres sites. Ainsi, lorsque le seuil de suffisance de couverture n'est pas atteint dans ledit disque (D), le site potentiel (31) est conservé dans la sélection de sites et mémorisé dans une mémoire.

L'étape suivante (75) du processus de validation de nouveaux sites fait intervenir des moyens d'établissement, pour chaque site ajouté (20), des nouvelles zones de couverture radio, définissant la couverture simulée d'un site ajouté (20). Ces moyens d'établissement des nouvelles zones de couverture radio représentent les nouvelles couvertures sur un dispositif d'affichage du système informatique (100), et mémorisent les données correspondantes. La nouvelle couverture à l'intérieur du contour (4) est estimée à l'aide d'un module de programme d'estimation de couverture du système informatique (100) qui utilise notamment les paramètres saisis relatifs au type d'antenne utilisée et ceux concernant les reliefs naturels ou artificiels. Puis le taux de recouvrement de chaque nouvelle couverture de site est établi à cette étape (75) par l'intermédiaire de moyens de calcul qui additionnent les différents recouvrements d'une même nouvelle couverture de site et ce taux de recouvrement est mémorisé pour chaque site ajouté (20). Le taux de recouvrement calculé pour un nouveau site (20) correspond alors à la contribution statistique du site (20) à la couverture globale.

Une dernière étape de tri (76) qui sert à restreindre la sélection de sites à ajouter (20) dans le contour (4) est réalisée par ajout un par un des sites potentiels (31) issus du premier tri (73) pour lesquels le taux de contribution est le plus élevé. Ce dernier tri (76) doit permettre de réduire le nombre de sites ajoutés (20) au strict nécessaire pour atteindre le seuil de couverture fixé par l'opérateur. L'application comprend pour cela des moyens de classement des sites ajoutés (20) en fonction de l'importance de leur taux de recouvrement. L'application comprend également pour cette étape des seconds moyens de comparaison entre le taux de couverture mémorisé à l'étape précédente (75) et qui tient compte des sites ajoutés (20) et le taux de couverture minimal ou seuil de couverture défini dans les paramètres d'entrée du fichier de configuration (11). Ces seconds moyens de comparaison permettent au système informatique (100) d'éliminer (78), par l'intermédiaire de seconds moyens d'élimination de sites, le site ajouté (20) au plus grand taux de recouvrement dans la mesure où l'enlèvement de celui-ci ne fait pas descendre la couverture résultante en dessous dudit taux de couverture minimal.

On peut évidemment imaginer dans un mode de réalisation différent de l'invention un processus similaire dans lequel, au lieu d'ajouter de proche en proche les sites potentiels (31) issus du premier tri (73) de plus grand taux de recouvrement, on complète de proche en proche la couverture de référence avec les sites potentiels (31) de plus petit taux de recouvrement, en s'arrêtant lorsque le taux de couverture minimal est atteint.

Le processus de validation de nouveaux sites se termine par une étape de sélection définitive (77) des sites à ajouter (20). Les moyens de mémorisation du système informatique (100) stockent les données relatives aux modifications de couverture apportées au contour (4) traité.

Il peut exister dans certains cas un chevauchement des contours créant une zone de bord (45) située à la fois dans un contour (4) prioritaire et un contour (5) de classe moins élevée. Ladite zone de bord (45) ne pose toutefois pas de problème spécifique puisqu'elle sera traitée en même temps que le contour (4) prioritaire qui est le plus exigeant. Les sites appartenant à cette zone de bord seront traités une nouvelle fois en même temps que le contour (5), sans modification supplémentaire par rapport au premier traitement qui est le plus exigeant, car les sites ajoutés en mémoire seront marqués comme non modifiables. Selon un autre mode de réalisation de l'invention, le système informatique (100) comporte des moyens de modification des contours de telle sorte qu'une zone de bord (45) qui est incluse dans des contours (4 et 5) de classes différentes soit considérée comme appartenant uniquement au contour (4) dont la classe est hiérarchiquement la plus élevée.

Un des avantages de l'invention réside dans l'optimisation du déploiement de sites, le nombre de sites étant minimisé, pour répondre aux spécifications marketing. La possibilité de paramétrer le pas du maillage (72) permet un traitement fin, avec un pas de seulement 250 mètres par exemple pour une zone à couvrir de la taille d'un département. L'invention vise ainsi à satisfaire des besoins en couverture d'un réseau de tout type, tel que GSM, UMTS, etc..

Un autre des avantages de l'invention réside dans la prise en compte de la couverture de référence, permettant de fournir des résultats cohérents avec les résultats trouvés en ingénierie radio par des méthodes plus fastidieuses. De plus, si des circonstances l'exigent, la sélection de sites à ajouter (20) peut être rapidement modifiée en remplaçant certains des paramètres d'entrée du fichier de configuration (11). L'invention donne donc la possibilité de simuler plusieurs solutions.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

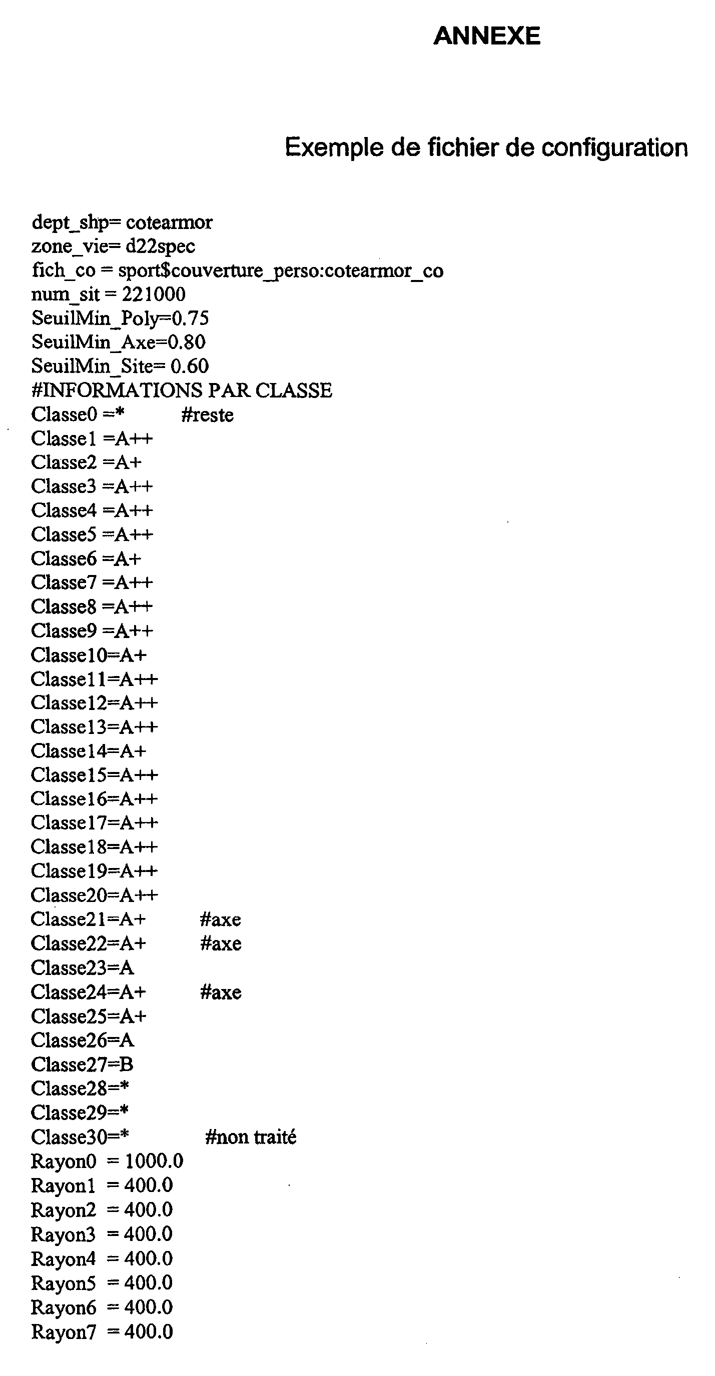

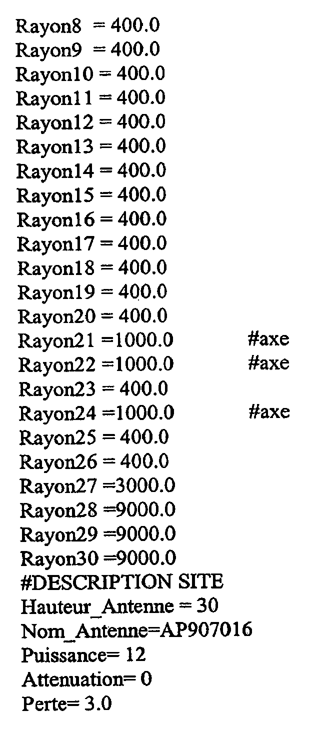

## Revendications

1. Procédé de modélisation destiné au déploiement de la couverture radio d'un réseau de radiotéléphonie cellulaire, au moyen d'un système informatique (100) mémorisant des données représentatives de cartes de couverture radio initiale ou couverture de référence dudit réseau de radiotéléphonie cellulaire, des données représentatives de cartes géographiques (3) découpées en zones délimitées par un contour, dites données géomarketing, des données représentatives d'au moins un type de station radio (2), des données représentatives d'un seuil de suffisance de couverture et des données représentatives d'un seuil de couverture dans chaque contour (4,5,6), procédé **caractérisé en ce qu'**il comporte dans un premier temps les étapes successives suivantes :
- sélection d'une carte géographique (3) par des moyens interactifs entre l'utilisateur et ledit système (100),
- récupération des données géomarketing et des données représentatives de la carte de couverture de référence correspondant à la carte géographique (3) sélectionnée,
Puis dans un deuxième temps le traitement successif de chaque contour (4,5,6) à l'aide d'un programme exécuté par ledit système informatique (100), ce traitement se déroulant de la manière suivante :
- si le seuil de suffisance de couverture du contour n'est pas atteint par la couverture actuelle, établissement par des moyens de calcul dudit système informatique (100), notamment à partir des données représentatives de la carte géographique (3) sélectionnée, d'un maillage régulier (72) et de pas déterminé, de sites potentiels (31) représentant des stations radioélectriques (2) à ajouter à l'intérieur du contour, chaque site potentiel (31) étant éloigné d'un autre d'au moins une distance déterminée (3R),
- définition d'une pluralité de classes de contours et de pas de maillage par des moyens de mémorisation dans ledit système informatique (100), les classes étant hiérarchisées, à chaque classe de contour étant attribué un pas de maillage ayant une valeur d'autant plus petite que la classe sera élevée dans la hiérarchie, le traitement successif de chaque contour étant effectué dans un ordre établi par la hiérarchie des classes, les contours de la classe la plus élevée étant traités en premier, les contours de la classe la moins élevée étant traités en dernier,
- sélection ou élimination par ledit programme des sites potentiels (31) en fonction d'au moins un critère relatif à leur utilité,
ledit système informatique disposant de données mémorisées d'une loi d'atténuation de propagation radio, de données relatives au type de station radio (2) utilisée et se servant de ces données pour simuler la couverture radio engendrée par un site ajouté (20).

2. Procédé selon la revendication 1, **caractérisé en ce que** ladite sélection ou élimination des sites potentiels (31) s'effectue par selon étapes suivantes :
- pour chaque site potentiel (31) dudit maillage régulier (72), comparaison entre d'une part la couverture de référence dans un disque (D) de rayon égal à ladite distance déterminée (3R) et centré sur le site potentiel (31), et d'autre part le seuil de suffisance de couverture, et conservation de ce site parmi les sites potentiels (31) si le seuil de suffisance de couverture n'est pas atteint dans ledit disque (D),
- calcul de la couverture radio de chaque site potentiel (31),
- calcul, en prenant un à un les sites, des taux de recouvrement entre les sites et la couverture de référence,
- ajout (77), de proche en proche, des sites dont la contribution à la couverture totale est la plus grande tant que l'ajout d'un site n'amène pas la couverture à un niveau supérieur audit seuil de couverture fixé pour le contour.

3. Procédé selon l'une quelconque des revendications 1 à 2, **caractérisé en ce qu'**il comporte une étape de saisie dans au moins un fichier de configuration (11) des paramètres suivants :
- nom du fichier relatif à ladite carte géographique (3),
- nom du fichier relatif aux spécifications du marketing,
- nom du fichier de couverture de référence,
- premier numéro, à 6 chiffres, de site à partir duquel les numéros de sites potentiels sont incrémentés,
- taux de couverture minimal pour les zones qui ne correspondent pas à des axes,
- taux de couverture minimal pour les zones qui correspondent à des axes,
- seuil de suffisance de couverture,
- valeur correspondant au niveau du champ cible fixé par l'opérateur pour chaque classe de contours,
- valeur du pas minimal du maillage pour chaque classe de contours,
- paramètres relatifs au type de station radio (2) et d'antenne utilisées.

4. Procédé selon la revendication 3, **caractérisé en ce que** lesdits paramètres relatifs au type de station radio (2) et d'antenne utilisées comprennent notamment :
- la hauteur de l'antenne utilisée pour la station radio (2),
- le nom de l'antenne utilisée,
- la puissance en sortie de baie d'émission, exprimée en dBW, pour l'antenne utilisée,
- l'atténuation d'émission de l'antenne,
- les pertes entre la baie d'émission et l'antenne, exprimée en dB.

5. Système informatique (100) de modélisation destiné au déploiement de la couverture radio d'un réseau de radiotéléphonie cellulaire, disposant de données représentatives de cartes de couverture radio initiale ou couverture de référence dudit réseau de radiotéléphonie cellulaire, de données représentatives de cartes géographiques (3) découpées en zones délimitées par un contour, dites données géomarketing, de moyens interactifs permettant à l'utilisateur de fixer préalablement des données relatives à au moins un type de station radio (2), à un seuil de suffisance de couverture et à un seuil de couverture à l'intérieur de chaque contour, système informatique (100) **caractérisé en ce qu'**il comporte :
- des moyens de sélection d'une carte géographique (3), de récupération des données géomarketing et des données représentatives de la carte de couverture de référence correspondant à la carte géographique (3) sélectionnée,
- un module, utilisant notamment des données représentatives de la carte géographique (3) sélectionnée, effectuant un maillage régulier (72) et de pas déterminé de sites potentiels (31) représentant des stations radioélectriques (2) à ajouter à l'intérieur du contour (4), chaque site potentiel (31) étant éloigné d'un autre d'au moins une distance déterminée (3R),
- des moyens de mémorisation et de prise en compte d'une pluralité de classes de contours et de pas de maillage, les classes étant hiérarchisées, à chaque classe de contour étant attribué un pas de maillage ayant une valeur d'autant plus petite que la classe sera élevée dans la hiérarchie,
- des moyens de présélection de contours en fonction de leur classe permettant notamment au système de suivre un ordre établi par la hiérarchie desdites classes pour le traitement des contours, les contours de la classe la plus élevée, étant traités en premier, les contours de la classe la moins élevée étant traités en dernier,
- des moyens de comparaison, pour chaque site potentiel (31) dudit maillage régulier (72), entre d'une part la couverture de référence dans le disque de rayon égal à ladite distance déterminée (3R) et centré sur le site potentiel (31), et d'autre part le seuil de suffisance de couverture, permettant au système de conserver ce site parmi les sites potentiels (31) si le seuil de suffisance de couverture n'est pas atteint dans ledit disque,
- des moyens de représentation des couvertures des sites potentiels (31) conservés, de mémorisation des données correspondant à ces nouvelles couvertures, et de définition de la nouvelle couverture dans le contour (4),
- des moyens de calcul, prenant les sites un à un, pour calculer la part de la contribution des sites à la couverture du contour,
- des moyens d'ajout, de proche en proche, des sites potentiels (31) contribuant le plus à la couverture totale tant que l'ajout d'un site (20) n'amène pas la couverture à un niveau supérieur audit seuil de couverture fixé pour le contour,
et **en ce qu'**il dispose de données mémorisées d'une loi d'atténuation de propagation radio, de données relatives au type de station radio (2) utilisée, et se sert de ces données pour simuler la couverture radio engendrée par la création d'un site.

6. Système selon la revendication 5, dans lequel les contours se divisent notamment en deux catégories :
- les contours d'une première catégorie incluant des axes de transport et formant des polygones aplatis,
- les autres contours, appartenant à une deuxième catégorie, qui forment des polygones.

7. Système selon la revendication 6, **caractérisé en ce que** le maillage régulier (72) d'un contour est hexagonal, chaque site potentiel (31) étant trisectoriel et localisé à l'intersection de trois hexagones réguliers dans le cas des contours de ladite deuxième catégorie.

8. Système selon la revendication 6 ou 7, **caractérisé en ce que** le maillage régulier est effectué par l'intermédiaire de sites bisectoriels et orientés dans le sens de l'axe de transport pour les contours de ladite première catégorie.

9. Système selon l'une quelconque des revendications 5 à 8, **caractérisé en ce qu'**il comporte des moyens de mémorisation et de prise en compte d'au moins un fichier contenant des données de géomarketing, d'au moins un fichier contenant la couverture de référence, et d'au moins un fichier de configuration (11) comprenant l'ensemble des paramètres d'entrée saisis par l'utilisateur.

## Patentansprüche

1. Modellierungsverfahren, vorgesehen für den Aufbau der Funkabdeckung eines zellularen Funktelefonie-Netzwerks mittels eines Datenverarbeitungssystems (100), das Daten, die Karten einer anfänglichen Funkabdeckung oder einer Referenzfunkabdeckung des zellularen Funktelefonie-Netzwerks repräsentieren, Daten, die geographische Karten (3), die in durch eine Kontur begrenzte Zonen, eingeteilt sind, repräsentieren, genannt Geomarketing-Daten, Daten, die mindestens einen Funkstationstyp (2) repräsentieren, Daten, die eine Schwelle für ausreichende Abdeckung repräsentieren, und Daten, die eine Schwelle für die Abdeckung innerhalb jeder Kontur (4, 5, 6) repräsentieren, speichert, wobei das Verfahren dadurch charakterisiert ist, dass es zu einem ersten Zeitpunkt die folgenden aufeinanderfolgenden Schritte aufweist:
- Auswahl einer geographischen Karte (3) durch Mittel, die zwischen dem Benutzer und dem System (100) interaktiv sind;
- Wiedergewinnung der Geomarketing-Daten und der Daten, die die Karte der Referenzfunkabdeckung repräsentieren, die der ausgewählten geographischen Karte (3) entspricht,
danach zu einem zweiten Zeitpunkt die sukzessive Verarbeitung jeder Kontur (4, 5, 6) mithilfe eines von dem Datenverarbeitungssystem (100) ausgeführten Programms, wobei diese Verarbeitung auf folgende Weise erfolgt:
- falls die Schwelle für ausreichende Abdeckung nicht durch die aktuelle Abdeckung erreicht wird, Erzeugung, mittels Berechnungsmitteln des Datenverarbeitungssystems (100), insbesondere ausgehend von den Daten, die die ausgewählte geographische Karte (3) repräsentieren, eines regulären Netzes (72) mit einem bestimmten Abstand von potentiellen Standorten (31), die Funkstationen (2) repräsentieren, die zum Inneren der Kontur hinzuzufügen sind, wobei jeder potentielle Standort (31) von einem anderen mindestens eine bestimmte Distanz (3R) entfernt ist,
- Definition einer Mehrzahl von Klassen von Konturen und Netzabständen durch Speichermittel in dem Datenverarbeitungssystem (100), wobei die Daten hierarchisch angeordnet sind und jeder Konturklasse ein Netzabstand zugeordnet ist, der einen Wert hat, der so klein ist, wie die Klasse weit oben in der Hierarchie angeordnet ist, wobei die sukzessive Verarbeitung jeder Kontur in einer Reihenfolge durchgeführt wird, die durch die Hierarchie der Klassen gegeben ist, wobei die Konturen der Klasse, die am weitesten oben ist, als erstes verarbeitet werden und die Konturen der Klasse, die am weitesten unten sind, als letztes verarbeitet werden,
- Auswahl oder Eliminierung von potentiellen Standorten (31) durch das Programm in Abhängigkeit von mindestens einem Kriterium bezüglich ihrer Brauchbarkeit,
wobei das Datenverarbeitungssystem über gespeicherte Daten von einem Funkausbreitungsdämpfungsgesetz und Daten bezüglich des Typs der verwendeten Funkstation (2) verfügt und sich dieser Daten bedient, um die Funkversorgung zu simulieren, die von einem hinzugefügten Standort (20) geschaffen wird.

2. Verfahren gemäß Anspruch 1, dadurch charakterisiert, dass die Auswahl oder Eliminierung von potentiellen Standorden (31) gemäß folgender Schritte erfolgt:
- Vergleich, für jeden potentiellen Standort (31) des regulären Netzes (72), zwischen einerseits der Referenzabdeckung in einer Scheibe (D) mit einem Radius gleich der bestimmten Distanz (3R) und einem Mittelpunkt an dem potentiellen Standort (31) und andererseits der Schwelle für ausreichende Abdeckung und Erhalten dieses Standorts unter den potentiellen Standorten (31), falls die Schwelle für ausreichende Abdeckung nicht durch die Scheibe (D) erreicht wird,
- Berechnung der Funkabdeckung jedes potentiellen Standorts (31),
- Berechnung, die Standorte einen nach dem anderen nehmend, der Überlappungsverhältnisse zwischen den Standorten und der Referenzabdeckung,
- Hinzufügen (77), nach und nach, der Standorte, deren Beitrag zu der Gesamtabdeckung am größten ist, solange das Hinzufügen eines Standorts die Abdeckung nicht auf eine Ebene hebt, die höher ist als die Abdeckungsschwelle, die für die Kontur festgelegt ist.

3. Verfahren gemäß einem der Ansprüche 1 bis 2, dadurch charakterisiert, dass es einen Schritt zum Eingeben der folgenden Parameter in mindestens eine Konfigurationsdatei (11) aufweist:
- Dateiname bezüglich der geographischen Karte (3),
- Dateiname bezüglich der Marketing-Spezifikationen,
- Dateiname bezüglich der Referenzabdeckung,
- erste sechsstellige Nummer des Standorts, ausgehend von dem die Nummern der potentiellen Standorte erhöht werden,
- minimales Versorgungsverhältnis für die Zonen, die nicht Achsen entsprechend,
- minimales Versorgungsverhältnis für die Zonen, die Achsen entsprechen,
- Schwelle für ausreichende Abdeckung,
- Wert entsprechend dem Ziel-Feldpegel, festgelegt vom Betreiber für jede Konturklasse,
- Wert des minimalen Netzabstands für jede Konturklasse,
- Parameter bezüglich der Funkstation (2) und der verwendeten Antennen.

4. Verfahren gemäß Anspruch 3, dadurch charakterisiert, dass die Parameter bezüglich der Funkstation (2) und der verwendeten Antennen insbesondere aufweisend:
- die Höhe der für die Funkstation (2) verwendeten Antenne,
- den Namen der verwendeten Antenne,
- die Ausgangsleistung des Sendegestells, ausgedrückt in dBW, für die verwendete Antenne,
- die Sendedämpfung der Antenne,
- die Verluste zwischen dem Sendegestell und der Antenne, ausgedrückt in dB.

5. Modellierungsdatenverarbeitungssystem, vorgesehen für den Aufbau der Funkabdeckung eines zellularen Funktelefonie-Netzwerks, das über Daten, die Karten einer anfänglichen Funkabdeckung oder einer Referenzfunkabdeckung des zellularen Funktelefonie-Netzwerks repräsentieren, über Daten, die geographische Karten (3), die in durch eine Kontur begrenzte Zonen, eingeteilt sind, repräsentieren, genannt Geomarketing-Daten und über interaktive Mittel verfügt, die es dem Benutzer ermöglichen, vorab Daten bezüglich mindestens eines Funkstationstyps (2), bezüglich einer Schwelle für ausreichende Abdeckung, und bezüglich einer Schwelle für die Abdeckung in jeder Kontur festzulegen, wobei das Datenverarbeitungssystem (100) dadurch charakterisiert ist, dass es aufweist:
- Mittel zur Auswahl einer geographischen Karte (3), zur Wiedergewinnung der Geomarketing-Daten und von Daten, die die Karte der Referenzfunkabdeckung repräsentieren, die der ausgewählten geographischen Karte (3) entspricht,
- ein Modul zum Erzeugen, insbesondere ausgehend von Daten, die die ausgewählte geographische Karte (3) repräsentieren, eines regulären Netzes (72) mit einem bestimmten Abstand von potentiellen Standorten (31), die Funkstationen (2) repräsentieren, die zum Inneren der Kontur (4) hinzuzufügen sind, wobei jeder potentielle Standort (31) von einem anderen mindestens eine bestimmte Distanz (3R) entfernt ist,
- Mittel zum Speichern und Berücksichtigen einer Mehrzahl von Klassen von Konturen und Netzabständen, wobei die Daten hierarchisch angeordnet sind und jeder Konturklasse ein Netzabstand zugeordnet ist, der einen Wert hat, der so klein ist, wie die Klasse weit oben in der Hierarchie angeordnet ist,
- Mittel zur Vorauswahl von Konturen in Abhängigkeit ihrer Klasse, die es dem System insbesondere ermöglichen, für die Verarbeitung der Konturen einer Reihenfolge zu folgen, die durch die Hierarchie der Klassen gegeben ist, wobei die Konturen der Klasse, die am weitesten oben ist, als erstes verarbeitet werden und die Konturen der Klasse, die am weitesten unten sind, als letztes verarbeitet werden,
- Mittel für einen Vergleich, für jeden potentiellen Standort (31) des regulären Netzes (72), zwischen einerseits der Referenzabdeckung in einer Scheibe (D) mit einem Radius gleich der bestimmten Distanz (3R) und einem Mittelpunkt an dem potentiellen Standort (31) und andererseits der Schwelle für ausreichende Abdeckung, die es dem System ermöglichen, diesen Standort unter den potentiellen Standorten (31) zu erhalten, falls die Schwelle für ausreichende Abdeckung nicht durch die Scheibe (D) erreicht wird,
- Mittel zu Repräsentation der Abdeckungen der erhaltenen potentiellen Standorte (31), zum Speichern von Daten entsprechend dieser neuen Abdeckungen und zur Definition der neuen Abdeckung innerhalb der Kontur (4),
- Berechnungsmittel zum Berechnen des Anteils des Beitrags der Standorte an der Abdeckung der Kontur, wobei die Standorten einer nach dem anderen genommen werden,
- Mittel zum Hinzufügen, nach und nach, der potentiellen Standorte (31), die am meisten zu der Gesamtabdeckung beitragen, solange das Hinzufügen eines Standorts (20) die Abdeckung nicht auf eine Ebene hebt, die höher ist als die Abdeckungsschwelle, die für die Kontur festgelegt ist,
und dadurch, dass es über gespeicherte Daten von einem Funkausbreitungsdämpfungsgesetz und Daten bezüglich des Typs der verwendeten Funkstation (2) verfügt und sich dieser Daten bedient, um die Funkversorgung zu simulieren, die von einem hinzugefügten Standort geschaffen wird.

6. System gemäß Anspruch 5, in dem sich die Konturen insbesondere in zwei Kategorien einteilen:
- die Konturen einer ersten Kategorie, die Transportachsen aufweisen und abgeflachte Polygone bilden,
- die anderen Konturen, die zu einer zweiten Kategorie gehören, und die Polygone bilden.

7. System gemäß Anspruch 6, dadurch charakterisiert, dass das reguläre Netz (72) einer Kontur sechseckig ist, wobei jeder potentielle Standort (31) drei Sektoren hat und sich im Falle von Konturen der zweiten Kategorie am Schnittpunkt von drei regulären Sechsecken befindet.

8. System gemäß Anspruch 6 oder 7, dadurch charakterisiert, dass das reguläre Netz mittels Standorten erzeugt wird, die zwei Sektoren haben und in Richtung der Transportachse für die Konturen der ersten Kategorie orientiert sind.

9. System gemäß einem der Ansprüche 5 bis 8, dadurch charakterisiert, dass es Mittel zum Speichern und Berücksichtigen von mindestens einer Datei, die die Geomarketing-Daten enthält, mindestens einer Datei, die die Referenzabdeckung enthält und mindestens einer Konfigurationsdatei (11), die die Menge von vom Benutzer eingegebenen Eingangsparametern enthält, aufweist.

## Claims

1. Method for modelling for deployment of the radio coverage of a cellular radio telephone network, by means of a data-processing system (100) storing data representative of maps of initial radio coverage or reference coverage of said cellular radio telephone network, data representative of geographical maps (3) cut into zones delimited by an outline, called geomarketing data, data representative of at least one type of radio station (2), data representative of a coverage sufficiency threshold and data representative of a coverage threshold in each outline (4, 5, 6), said method being **characterised in that** it firstly comprises the following successive steps:
- selection of a geographical map (3) by interactive means between the user and said system (100),
- retrieval of the geomarketing data and the data representative of the map of reference coverage corresponding to the selected geographical map (3),
then secondly successive processing of each outline (4, 5, 6) with the aid of a programme executed by said data-processing system (100), this processing taking place in the following manner:
- if the coverage sufficiency threshold of the outline is not reached by the current coverage, establishment by means of calculation of said data-processing system (100), in particular from the data representative of the selected geographical map (3), of a regular grid configuration (72) of given pitch, of potential sites (31) representing radio electrical stations (2) to be added inside the outline, each potential site (31) being distant from another by at least a given distance (3R),
- definition of a plurality of classes of outlines and grid pitches by means of storage in said data-processing system (100), the classes being ranked, each class of outline being attributed a grid pitch having a value which is less the higher the class in the ranking, the successive processing of each outline being effected in an order established by the ranking of the classes, the outlines of the highest class being processed first, the outlines of the lowest class being processed last,
- selection or elimination by said programme of the potential sites (31) according to at least one criterion relating to their utility,
said data-processing system having stored data of a radio propagation attenuation law, data relating to the type of radio station (2) used and employing this data to simulate the radio coverage produced by an added site (20).

2. Method according to claim 1, **characterised in that** said selection or elimination of the potential sites (31) is effected in the following steps:
- for each potential site (31) of said regular grid configuration (72), comparison between firstly the reference coverage in a disk (D) of radius equal to said given distance (3R) and centred on the potential site (31), and secondly the coverage sufficiency threshold, and retention of this site among the potential sites (31) if the coverage sufficiency threshold is not reached in said disk (D),
- calculation of the radio coverage of each potential site (31),
- calculation, taking the sites one by one, of the levels of overlap between the sites and the reference coverage,
- addition (77), bit by bit, of the sites whose contribution to the total coverage is the greatest as long as the addition of a site does not bring the coverage to a level greater than said coverage threshold set for the outline.

3. Method according to any one of claims 1 to 2, **characterised in that** it comprises an input step in which the following parameters are recorded in at least one configuration file (11) :
- name of the file relating to said geographical map (3),
- name of the file relating to the marketing specifications,
- name of the file for the reference coverage,
- first site number, with six digits, from which the numbers of potential sites are incremented,
- minimum level of coverage for the zones which do not correspond to axes,
- minimum level of coverage for the zones which do correspond to axes,
- coverage sufficiency threshold,
- value corresponding to the target field level set by the operator for each class of outline,
- value of the minimum grid pitch for each class of outline,
- parameters relating to the type of radio station (2) and antenna used.

4. Method according to claim 3, **characterised in that** said parameters relating to the type of radio station (2) and antenna used comprise in particular:
- the height of the antenna used for the radio station (2),
- the name of the antenna used,
- the emission bay power output, expressed in dBW, for the antenna used,
- the emission attenuation of the antenna,
- the losses between the emission bay and the antenna, expressed in dBW.

5. Data-processing system (100) for modelling for deployment of the radio coverage of a cellular radio telephone network, using data representative of maps of initial radio coverage or reference coverage of said cellular radio telephone network, data representative of geographical maps (3) cut into zones delimited by an outline, called geomarketing data, interactive means allowing the user to set in advance data relating to at least one type of radio station (2), a coverage sufficiency threshold and a coverage threshold inside each outline, said data-processing system (100) being **characterised in that** it comprises:
- means for selecting a geographical map (3), retrieving the geomarketing data and the data representative of the reference coverage map corresponding to the selected geographical map (3),
- a module, using in particular data representative of the selected geographical map (3), effecting regular grid configuration (72) of given pitch of potential sites (31) representing radio electrical stations (2) to be added inside the outline (4), each potential site (31) being distant from another by at least a given distance (3R),
- means for storing and taking into account a plurality of classes of outlines and grid pitches, the classes being ranked, each class of outline being attributed a grid pitch having a value which is smaller the higher the class is ranked,
- means for preselecting outlines as a function of their class allowing in particular the system to follow an order established by the ranking of said classes for the processing of the outlines, the outlines of the highest class being processed first, the outlines of the lowest class being processed last,
- means for comparing, for each potential site (31) of said regular grid configuration (72), on the one hand the reference coverage in the disk of radius equal to said given distance (3R) and centred on the potential site (31), and on the other hand the coverage sufficiency threshold, enabling the system to retain this site among the potential sites (31) if the coverage sufficiency threshold is not reached in said disk,
- means for representing the coverages of the potential sites (31) retained, storing the data corresponding to these new coverages, and defining the new coverage in the outline (4),
- means for calculating, taking the sites one by one, to calculate their share in the contribution of the sites to the coverage of the outline,
- means for adding, step by step, the potential sites (31) contributing the most to the total coverage as long as the addition of a site (20) does not bring the coverage to a level greater than said coverage threshold set for the outline,
and **in that** it uses stored data for a radio propagation attenuation law, data relative to the type of radio station (2) used, and employs this data to simulate the radio coverage produced by the creation of a site.

6. System according to claim 5, in which the outlines are divided in particular into two categories:
- the outlines of a first category including axes of transport and forming flattened polygons,
- the other outlines, belonging to a second category which form polygons.

7. System according to claim 6, **characterised in that** the regular grid configuration (72) of an outline is hexagonal, each potential site (31) being trisectorial and located at the intersection of three regular hexagons in the case of the outlines of said second category.

8. System according to claim 6 or 7, **characterised in that** the regular grid configuration is effected through the intermediary of bisectorial sites oriented in the direction of the axis of transport for the outlines of said first category.

9. System according to any one of claims 5 to 8, **characterised in that** it comprises means for storing and taking into account at least one file containing geomarketing data, at least one file containing the reference coverage, and at least one configuration file (11) comprising all the input parameters recorded by the user.
